# EUROPEAN PATENT APPLICATION

(11) **EP 4 614 709 A1**
(43) Date of publication of application: **10.09.2025**
(21) Application number: 24868478.9
(22) Date of filing: 09.08.2024
(51) Int. Cl.: H01M 50/367, H01M 50/342, H01M 50/105, H01M 50/211, H01M 50/375, H01M 50/147, H01M 50/249, H01M 10/6551

(54) **BATTERY PACK AND VEHICLE INCLUDING SAME**

(30) Priority: 22.09.2023 KR 20230127393; 05.08.2024 KR 20240103983
(71) Applicant: LG Energy Solution, Ltd., Seoul 07335 (KR)
(72) Inventor: KIM, Soo-Youl, Daejeon 34122 (KR)
(74) Representative: Plasseraud IP
(86) International application number: PCT/KR2024/011882
(87) International publication number: WO 2025/063499

(57) **Abstract**

Disclosed is a battery pack and a vehicle including the same. The battery pack includes a plurality of battery cells; and a pack case configured to accommodate the plurality of battery cells and having a pack venting portion for venting flame or gas, and a cell venting portion is formed in the battery cell itself, and when the cell venting portion of the battery cell and the pack venting portion of the pack case are communicated.

## Description

### TECHNICAL FIELD

This application is based on and claims priority from Korean Patent Application No. 10-2023-0127393 filed on September 22, 2023, and Korean Patent Application No. 10-2024-0103983 filed on August 5, 2024, with the Korean Intellectual Property Office, the disclosure of which is incorporated herein in its entirety by reference.

The present disclosure relates to a battery pack and a vehicle including the same, and more specifically, to a battery pack in which a flame or gas generated from a battery cell provided in the battery pack may be discharged in a preset direction, and a vehicle including the same.

### BACKGROUND ART

In general, a secondary battery refers to a battery that can be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as the battery cell is applied to devices requiring high output voltage and large charging capacity, such as electric vehicles or ESS (Energy Storage Systems), a battery module configured by connecting a plurality of battery cells in series, parallel, or a combination of series and parallel, and a battery pack configured by connecting such battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

That is, when a flame occurs in at least one of battery cells inside the case of a battery module provided in a battery pack, if the flame leaks out of the case of the battery module, the flame may not only spread to other battery modules, but may also cause a dangerous situation for the user.

For example, in a state where a battery module or battery pack is installed in an electric vehicle, if a flame is generated in the battery cell and the flame leaks to the outside, there is a problem that a driver of the electric vehicle may be burned or put in a dangerous situation.

In another case, if a flame generated from any battery module spreads to neighboring battery modules, there is a problem in that the battery module or battery pack may be damaged, burned out, or explode due to a chain reaction of flames, which makes it difficult to secure the stability of the battery module or battery pack. In addition, gas is also generated from the battery cells inside the battery module, and if the gas is discharged in an undesirable direction, the gas also causes various problems.

Therefore, directional venting, which controls the discharge direction of high-temperature gas or flame generated from each battery cell in a preset direction, is becoming important.

However, in the conventional battery cells, flame or gas is emitted at an unexpected sealing portion rather than a preset portion, causing the flame or gas to move in an undesirable direction. For this reason, stability problems occur not only for the battery cell but also for the battery module and battery pack.

### DISCLOSURE

### Technical Problem

Therefore, the present disclosure is directed to providing a battery pack that allows flame or gas generated by ignition in a battery cell to be discharged in a preset direction (directional venting), and a vehicle including the same.

In addition, the present disclosure is directed to providing a battery pack capable of preventing serial thermal runaway through directional venting of flame or gas and improving the stability of the battery cell, and a vehicle including the same.

In addition, the present disclosure is directed to providing a battery pack capable of reducing the overall weight and volume of the battery pack and increasing energy density, and a vehicle including the same.

In addition, the present disclosure is directed to providing a battery pack that facilitates handling and installation of battery cells mounted in the battery pack, and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery cells; and a pack case configured to accommodate the plurality of battery cells and having a pack venting portion for venting flame or gas, wherein a cell venting portion is formed in the battery cell itself, and when the cell venting portion of the battery cell and the pack venting portion of the pack case are communicated.

In an embodiment, the pack venting portion may be formed at a lower portion of the pack case.

In an embodiment, a directional venting channel may be formed in the pack case to provide a path that is communicated with the pack venting portion to discharge the flame or the gas to the outside of the pack case.

In an embodiment, the directional venting channel may be formed below the pack venting portion.

In an embodiment, the pack case may include a lower frame, and a cooling channel may be formed in the lower frame to cool not only the battery cell but also the flame or the gas discharged through the pack venting portion.

In an embodiment, the cooling channel may be formed in the lower frame.

In an embodiment, the cooling channel may be formed in a direction intersecting a direction in which the plurality of battery cells are arranged.

In an embodiment, the cooling channel may be formed on at least one of both sides of the pack venting portion.

In an embodiment, the lower frame may include a body and a lower plate coupled to the body, at least one barrier member may be provided to form the cooling channel, and the cooling channel may be formed between the barrier member and the lower plate.

In an embodiment, the battery pack may comprise a plurality of battery modules in which the plurality of battery cells are accommodated, a module venting portion may be formed in the battery module, and the cell venting portion of the battery cell, the module venting portion of the battery module, and the pack venting portion of the pack case may be all communicated.

In an embodiment, the battery module may include a module case in which the plurality of battery cells are accommodated and the module venting portion is formed to vent flame or gas, and when the cell venting portion of the battery cell is ruptured, the cell venting portion, the module venting portion of the module case, and the pack venting portion of the pack case may be communicated with each other.

In an embodiment, the module venting portion may be formed at a lower portion of the module case.

In an embodiment, the module case may have a thermal resin coated region and a thermal resin uncoated region formed in the lower portion thereof, and the module venting portion may be formed in the thermal resin uncoated region.

In an embodiment, the module case may include a lower case and side cases, and at least one of the side cases may be formed by being bent from the lower case.

In an embodiment, the module case may include a U-shaped case.

In an embodiment, the module case may include an upper case, and an upward venting prevention member may be disposed at a lower side of the upper case to prevent flame or gas from venting upward.

In an embodiment, the upward venting prevention member may be a compression pad disposed between the upper case and the battery cell.

In an embodiment, the upward venting prevention member may be made of silicone.

In an embodiment, the upward venting prevention member may be a thermal resin applied to the battery cell.

In an embodiment, the module case may include a side case, and a side venting prevention member may be disposed at an inner side of the side case to prevent flame or gas from venting to a side surface.

In an embodiment, the side venting prevention member may be disposed in a terrace portion of the plurality of battery cells.

In an embodiment, the side venting prevention member may be made of silicone.

In an embodiment, the battery cell may be a pouch-type battery cell, the pouch-type battery cell may include an electrode assembly including a first electrode plate with a first polarity, a second electrode plate with a second polarity, and a separator interposed between the first electrode plate and the second electrode plate; an electrode lead connected to the electrode assembly; and a cell case configured to accommodate the electrode assembly and support the electrode lead and having a sealing portion and a non-sealing portion, and the cell venting portion may be formed in the non-sealing portion of the cell case.

In an embodiment, the cell venting portion may include a through hole formed in the non-sealing portion of the cell case; and a thin film coupled to the non-sealing portion to block the through hole.

In an embodiment, the thin film of the cell venting portion may be formed thinner than a thickness of the non-sealing portion of the cell case.

In an embodiment, the thin film of the cell venting portion may be made of a material having a lower melting point than the non-sealing portion of the cell case.

In an embodiment, the thin film may be made of a metal material.

In an embodiment, the thin film may be coupled to the non-sealing portion by welding or bonding.

In an embodiment, the cell venting portion may have a line-shaped groove or notch formed therein.

In an embodiment, the groove or notch may include a center line formed in a center portion; a first end line extending from one end of the center line; and a second end line extending from the other end of the center line.

In an embodiment, the cell venting portion may be ruptured prior to the sealing portion by the flame or the gas.

In an embodiment, the non-sealing portion may be provided in plurality, and the cell venting portion may be formed in a non-sealing portion with a narrowest area among the plurality of the non-sealing portions.

In an embodiment, the battery module may further comprise a cell cover configured to surround and support the cell case to reinforce rigidity of the cell case.

In an embodiment, an open portion may be formed at a lower side of the cell cover, and the cell venting portion may be disposed to face downward to correspond to the open portion.

In an embodiment, the cell cover may include a first cover portion covering one side of the cell case; a second cover portion covering the other side of the cell case; and
a third cover portion connecting the first cover portion and the second cover portion and covering an upper side of the cell case, and the open portion may be formed at a side opposite to the third cover portion.

In an embodiment, the cell cover may be configured to support a standing state of the cell case.

Meanwhile, according to another aspect of the present disclosure, there may be provided a vehicle including at least one battery pack described above.

### Advantageous Effects

The embodiments of the present disclosure have the effect of allowing flame or gas generated by ignition in a battery cell to be discharged in a preset direction (directional venting).

Alternatively, there is an effect of preventing serial thermal runaway and improving the stability of the battery cell through directional venting of flame or gas.

Alternatively, there is an effect of reducing the overall weight and volume of the battery pack and increasing the energy density.

Alternatively, there is an effect of facilitating handling and installation of battery cells mounted in a battery pack.

However, the effects that can be obtained through the present disclosure are not limited to the above, and other effects not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic exploded perspective view showing a battery pack according to the first embodiment of the present disclosure.
FIG. 2 is a drawing showing a pack case in the battery pack according to the first embodiment of the present disclosure, with an upper frame omitted.
FIG. 3 is an enlarged view showing part A of FIG. 2.
FIG. 4 is a cross-sectional view taken along line X-X' of FIG. 1.
FIG. 5 is an enlarged view showing part B of FIG. 4.
FIG. 6 is a drawing showing that a cell venting portion of FIG. 5 is ruptured so that flame or gas is discharged.
FIG. 7 is a perspective view showing a bottom surface of a battery module according to the first embodiment of the present disclosure.
FIG. 8 is an enlarged view showing part C of FIG. 7.
FIG. 9 is an exploded perspective view showing the battery module according to an embodiment of the present disclosure.
FIG. 10 is a perspective view showing a lower case and a side case in the battery module according to the first embodiment of the present disclosure.
FIG. 11 is a drawing showing a battery cell according to the first embodiment of the present disclosure in which a pouch is unfolded.
FIG. 12 is a drawing showing a thin film coupled to a through hole formed in the pouch in FIG. 11.
FIG. 13 is a drawing showing that the pouch is folded in an arrow direction in FIG. 12.
FIG. 14 is a drawing viewed along an arrow direction D in FIG. 13.
FIG. 15 is a perspective view showing that a plurality of battery cells according to the first embodiment of the present disclosure are stacked, seen from above.
FIG. 16 is a drawing showing a notch formed in a thin film according to a modified embodiment of FIG. 14.
FIG. 17 is a perspective view showing that a plurality of battery cells of FIG. 16 are stacked, seen from below.
FIG. 18 is an exploded perspective view showing the battery cell and a cell cover according to the first embodiment of the present disclosure.
FIG. 19 is a perspective view showing that the cell cover is coupled to the battery cell in FIG. 18.
FIG. 20 is a perspective view showing a bottom surface of a battery pack according to a modified embodiment of the present disclosure, with a lower plate separated.
FIG. 21 is a drawing, seen along E of FIG. 20.
FIG. 22 is a cross-sectional side view of FIG. 20.
FIG. 23 shows a battery module according to a modified embodiment of the present disclosure, with an upper case separated.
FIG. 24 shows a battery module according to another modified embodiment of the present disclosure, with an upward venting prevention member separated.
FIG. 25 shows a battery module according to still another modified embodiment of the present disclosure, with the side case of the battery module separated.
FIG. 26 shows a side venting prevention member positioned on a terrace portion of a battery cell in FIG. 25.
FIG. 27 is a schematic exploded perspective view showing a battery pack according to the second embodiment of the present disclosure.
FIG. 28 is a cross-sectional view taken along line Y-Y' of FIG. 27.
FIG. 29 is an enlarged view showing part F of FIG. 28.
FIG. 30 is a drawing showing that a cell venting portion is ruptured in FIG. 29 so that a flame or gas is discharged.
FIG. 31 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

The following embodiments of the present disclosure may be implemented independently. Furthermore, the present disclosure may be implemented by combining two or more of the following embodiments. The following embodiments may be implemented independently and may also be freely combined with each other.

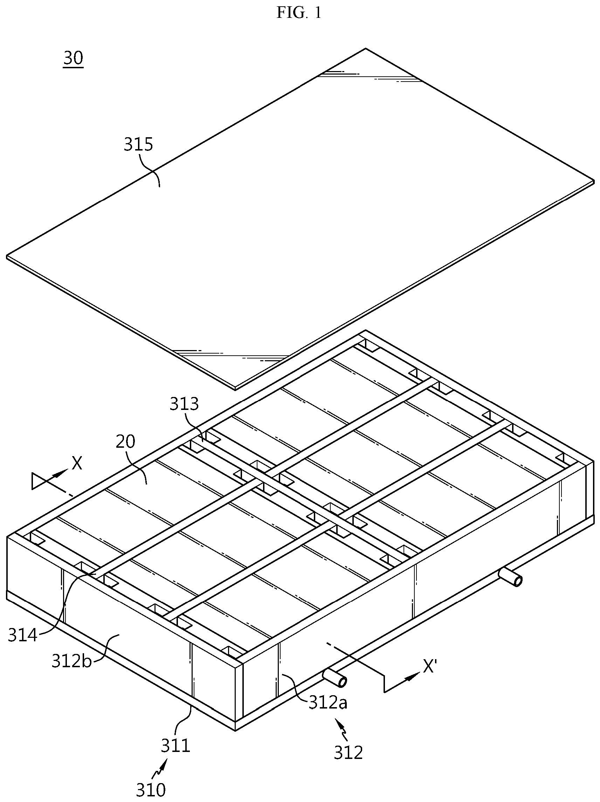

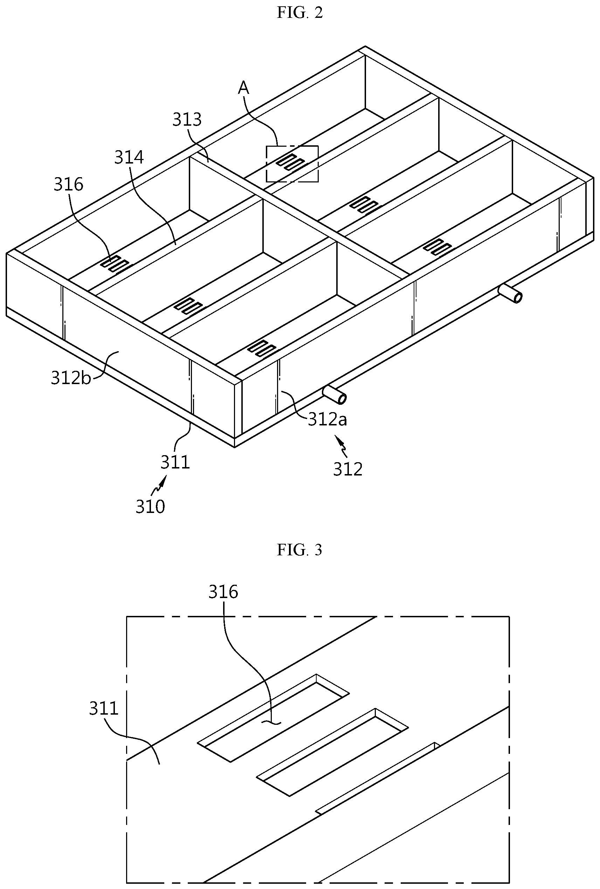

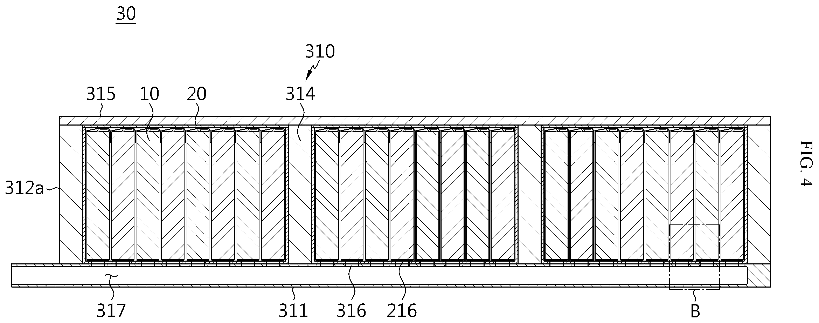

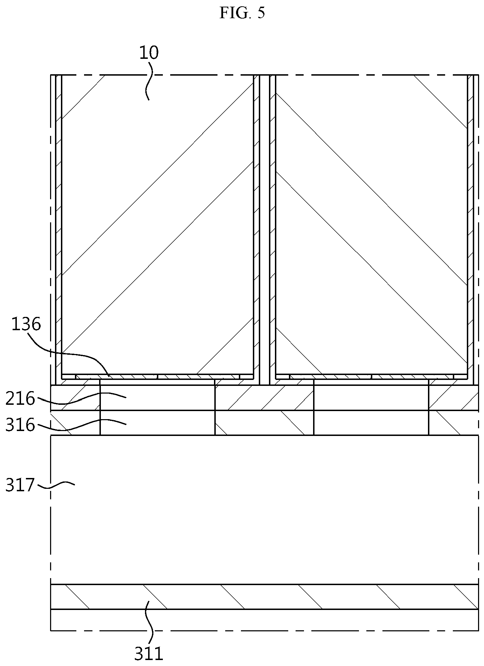

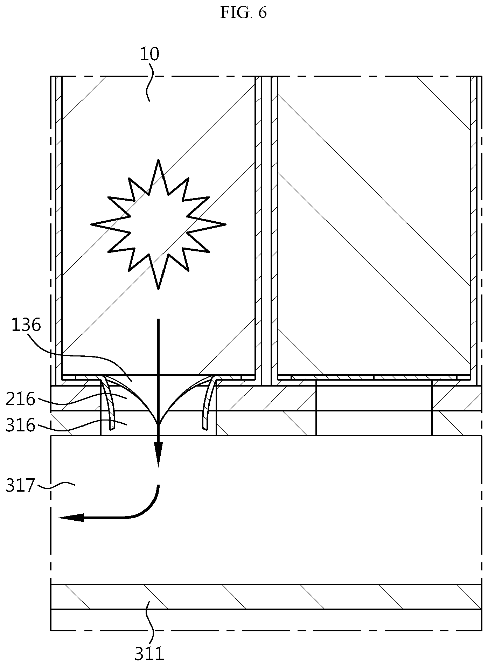

FIG. 1 is a schematic exploded perspective view showing a battery pack according to an embodiment of the present disclosure, FIG. 2 is a drawing showing a pack case in the battery pack according to an embodiment of the present disclosure, with an upper frame omitted, FIG. 3 is an enlarged view showing part A of FIG. 2, FIG. 4 is a cross-sectional view taken along line X-X' of FIG. 1, FIG. 5 is an enlarged view showing part B of FIG. 4, and FIG. 6 is a drawing showing that a cell venting portion of FIG. 5 is ruptured so that flame or gas is discharged.

Referring to FIGS. 1 and 4 together, a battery pack 30 according to the first embodiment of the present disclosure may be configured to include a plurality of battery cells 10, a plurality of battery modules 20, and a pack case 310.

In one embodiment, the battery cell 10 may be accommodated in a module case 210 of the battery module 20, and the module case 210 in which the battery cells 10 are accommodated may be accommodated in the pack case 310 to form the battery pack 30. In another embodiment, the battery cells 10 may be directly accommodated in the pack case 310 of the battery pack 30, which will be described later.

The battery module 20 is provided in plurality, and the plurality of battery modules 20 are arranged in various ways. For example, as shown in FIG. 1, the battery modules 20 may be arranged in a horizontal direction and a vertical direction, but is not limited thereto.

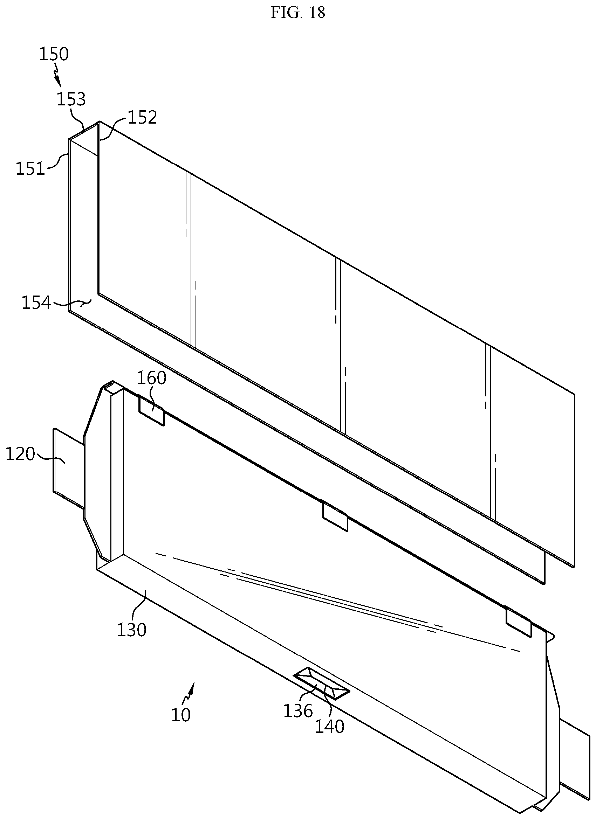

Referring to FIG. 4, the plurality of battery cells 10 are stacked on each other in the battery module 20. The method of stacking the plurality of battery cells 10 is diverse. As explained later in detail, the battery cells 10 may be stacked on the module case 210 a cell cover 150, or the battery cells may be stacked in the module case 210 with a cell cover 150 (see FIG. 18) coupled with the battery cells.

Referring to FIG. 5, a module venting portion 216 may be formed in the battery module 20, and the module venting portion 216 of the battery module 20 may be configured to communicate with a pack venting portion 316 formed in the pack case 310. A cell venting portion 136 may be formed in the battery cell 10, and as in FIG. 6, when the cell venting portion 136 of the battery cell 10 is ruptured by a flame or gas, the cell venting portion 136 may be configured to communicate with the module venting portion 216 of the module case 210. The module venting portion 216 may be formed as an opening. In addition, the pack venting portion 316 may also be formed as an opening. That is, referring to FIG. 6, when the cell venting portion 136 of the battery cell 10 is ruptured, the cell venting portion 136, the module venting portion 216 of the battery module 20, and the pack venting portion 316 of the pack case 310 may all be communicated, and thereby, the flame or gas generated from the battery cell 10 may be discharged to the outside of the pack case 310 through the cell venting portion 136, the module venting portion 216, and the pack venting portion 316. That is, in this way, directional venting in which the flame or gas generated by ignition in the battery cell is discharged in a preset direction becomes possible. In addition, there is an effect of preventing chain thermal runaway and improving the stability of the battery cell through the directional venting of the flame or gas.

The battery module 20 will be described specifically and concretely later.

Referring to FIG. 1, the plurality of battery modules 20 are accommodated in the pack case 310. The pack case 310 may be configured to include, for example, a lower frame 311, a side frame 312, an inner frame 313, a barrier frame 314, and an upper frame 315.

The lower frame 311 is configured so that the plurality of battery modules 20 are placed thereon. The lower frame 311 may be formed in a rectangular plate shape, but is not limited thereto. The lower frame 311 forms the bottom of the pack case 310.

The side frame 312 may be configured to extend upward from an edge of the lower frame 311. The side frame 312 defines a height of the pack case 310 and forms a preset space between the side frame 312 and the lower frame 311. Also, the plurality of battery modules 20 are placed in the space between the side frame 312 and the lower frame 311. The side frame 312 may include a long side frame 312a having a relatively long length and a short side frame 312b having a relatively short length. However, in another embodiment, all side frames 312 may be formed to have the same length.

The inner frame 313 extends upward inside the lower frame 311 and is coupled to the side frame 312. One or more inner frames 313 may be provided, and the plurality of battery modules 20 may be arranged to face each other or face in the same direction based on the inner frame 313. The inner frame 313 is arranged in the same direction as the short side frame 312b.

The barrier frame 314 is coupled to the inner frame 313. Here, the barrier frame 314 is arranged in the same direction as the long side frame 312a. In addition, the barrier frame 314 is interposed between the plurality of battery modules 20. In FIG. 1, one barrier frame 314 is arranged between two neighboring battery modules 20, but is not limited thereto.

The upper frame 315 is coupled to the side frame 312. The upper frame 315 may have a rectangular plate shape, but is not limited thereto.

Referring to FIGS. 2 and 3, a pack venting portion 316 through which a flame or gas is vented is formed in the pack case 310. The number of pack venting portions 316 formed in the pack case 310 may vary, and may be formed in a number corresponding to the number of battery cells 10, but is not limited thereto.

The pack venting portion 316 may be formed at the lower portion of the pack case 310, for example, at the lower frame 311. If the pack venting portion 316 is formed at the lower frame 311 in this way, downward venting is possible, and the risk of a driver of an electric vehicle being burned may be reduced. For example, when the battery pack 30 is installed in an electric vehicle and a flame is generated in the battery cell 10 provided inside the battery pack 30 and leaks to the outside, a driver driving the electric vehicle may be burned or may be in a dangerous situation.

The battery pack 30 according to the first embodiment of the present disclosure may protect the driver from flame even if flame or gas is generated from the battery cells 10, since downward venting is possible through the pack venting portion 316 formed in the lower frame 311.

Referring to FIGS. 4 and 5, for the downward venting described above, a directional venting channel 317 may be formed in the pack case 310 to provide a path that is communicated with the pack venting portion 316 to discharge flame or gas to the outside of the pack case 310. Here, the directional venting channel 317 may be formed below the pack venting portion 316.

Referring to FIG. 6, a flame or gas generated in the battery cell 10 ruptures the cell venting portion 136 of the cell case 130, moves downward through the module venting portion 216 of the module case 210 and the pack venting portion 316 of the pack case 310, and is then completely discharged to the outside of the pack case 310 through the directional venting channel 317 communicated with the pack venting portion 316 (see arrows in FIG. 6).

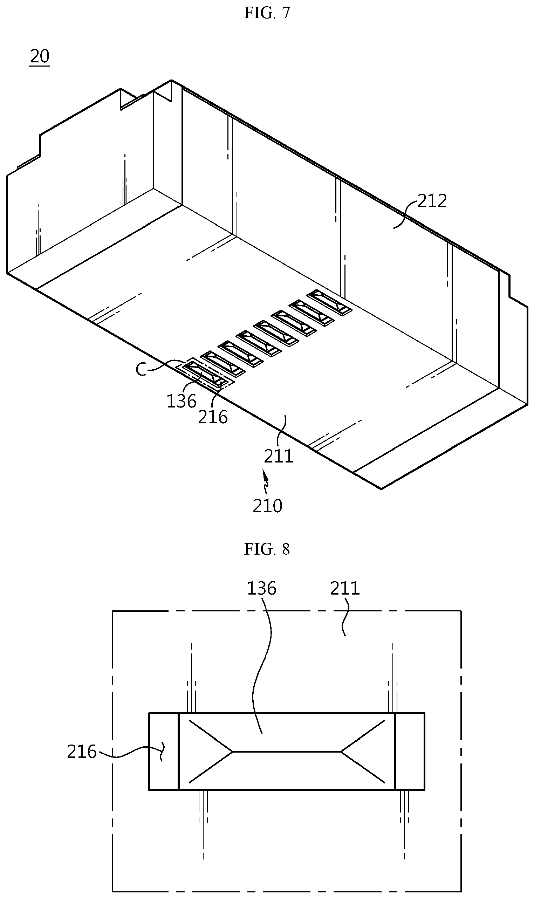

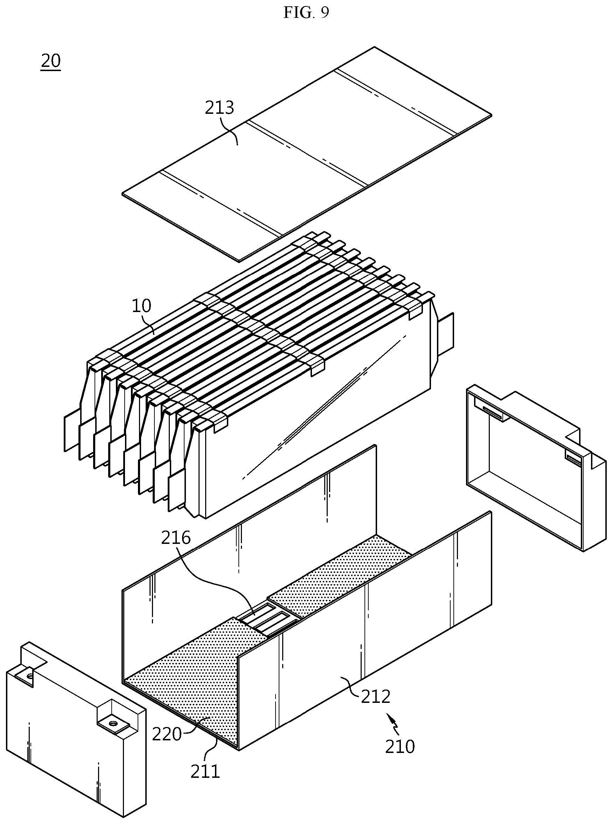

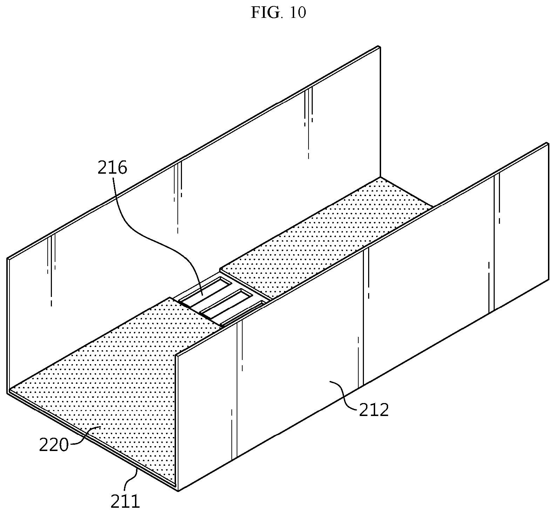

FIG. 7 is a perspective view showing a bottom surface of a battery module according to the first embodiment of the present disclosure, FIG. 8 is an enlarged view showing part C of FIG. 7, FIG. 9 is an exploded perspective view showing the battery module according to an embodiment of the present disclosure, and FIG. 10 is a perspective view showing a lower case and a side case in the battery module according to the first embodiment of the present disclosure.

Referring to FIGS. 7 and 9, the battery module 20 according to the first embodiment of the present disclosure is configured to include a plurality of battery cells 10 and a module case 210.

The plurality of battery cells 10 may be stacked on each other. The battery cells 10 may have various structures, and furthermore, the plurality of battery cells 10 may be stacked in various ways.

A cell venting portion 136 (see FIG. 8) may be formed in the battery cell 10 itself, and the cell venting portion 136 of the battery cell 10 may be disposed at a position corresponding to the module venting portion 216 formed in the module case 210 (see FIGS. 7 and 8) so as to communicate with the module venting portion 216 when the cell venting portion 136 is ruptured. That is, as described above, when the cell venting portion 136 of the battery cell 10 is ruptured, the cell venting portion 136, the module venting portion 216 of the battery module 20, and the pack venting portion 316 of the pack case 310 may all be communicated, and thereby, a flame or gas generated from the battery cell 10 may be discharged to the outside of the pack case 310 through the cell venting portion 136, the module venting portion 216, and the pack venting portion 316. That is, in this way, directional venting in which a flame or gas generated by ignition in the battery cell is discharged in a preset direction becomes possible.

The battery cell 10 will be described specifically and concretely later.

Referring to FIG. 9, a plurality of battery cells 10 are stacked and accommodated in the module case 210.

The module case 210 surrounds the plurality of battery cells 10, thereby protecting the battery cells 10 from external vibrations or shocks.

The module case 210 may be formed in a shape corresponding to the shape of the stack formed by stacking the plurality of battery cells 10. For example, if the stack in which the plurality of battery cells 10 are stacked is formed in a hexahedral shape, the module case 210 may also be formed in a hexahedral shape to correspond thereto. However, the present invention is not limited thereto.

The module case 210 may include an upper case 213, a lower case 211, and a side case 212. Referring to FIG. 9, the side case 212 is formed at each of both ends of the lower case 211. Here, the side case 212 may be formed by being bent from the lower case 211. In this case, the lower case 211 and the side case 212 may be manufactured integrally. If the module case 210 is manufactured integrally, the coupling process is simplified and convenient. In addition, if the side case 212 is formed by being bent from the lower case 211, the lower case 211 and the side case 212 may be formed in an approximately U-shape. However, the lower case 211 and the side case 212 do not necessarily have to be a U-shape, and may have a shape similar to a U-shape. In this case, the module case 210 may include a side case 212 and a lower case 211 of a U-shape, and may also include an upper case 213. However, the side case 212 and the lower case 211 of the module case 210 may also be formed separately and coupled by welding, etc.

The module case 210 may be manufactured, for example, by bending a metal plate. However, the material of the module case 210 is not limited to metal.

Referring to FIG. 7, a module venting portion 216 through which a flame or gas is vented may be formed in the module case 210. Here, the module venting portion 216 may be formed in the lower portion of the module case 210, for example, the lower case 211. As described above, the module venting portion 216 may be communicated with both the cell venting portion 136 and the pack venting portion 316 that are ruptured by flame or gas.

Referring to FIG. 10, a coated region of thermal resin 220 and an uncoated region may exist in the lower portion of the module case 210, for example, the lower case 211. The thermal resin 220 is coupled to a cooling plate or the like to transfer heat generated from the battery cell 10. Here, the module venting portion 216 may be formed in the uncoated region of the thermal resin 220. That is, for example, the uncoated region of the thermal resin 220 may be formed in the center portion of the lower case 211, and the module venting portion 216 may be formed in the uncoated region of the thermal resin 220, so that the module venting portion 216 and the thermal resin 220 do not interfere with each other. In this state, when the battery cell 10 is placed on the lower case 211 as in FIG. 9, the cell venting portion 136 of the battery cell 10 may be disposed at the position of the module venting portion 216 formed in the lower case 211 of the module case 210 as in FIG. 8. Here, the module venting portion 216 may be formed larger than the cell venting portion 136. In addition, a portion of the battery cell 10 where the cell venting portion 136 is not formed comes into contact with the thermal resin 220.

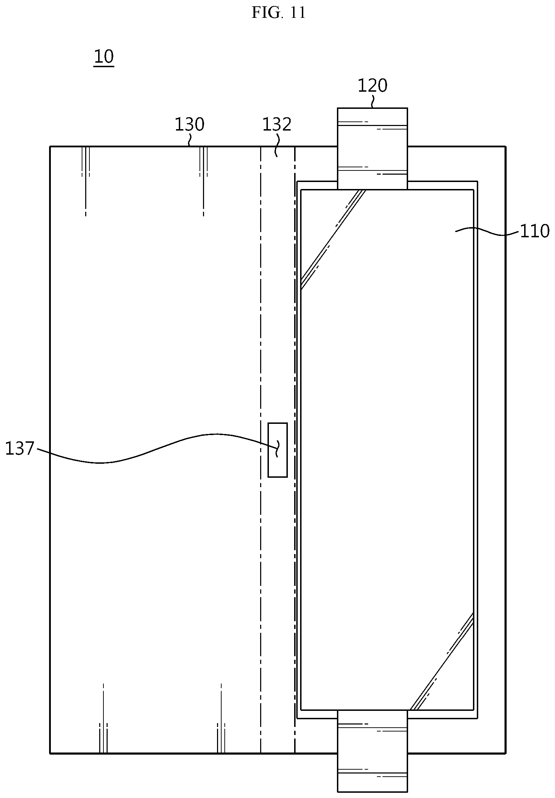

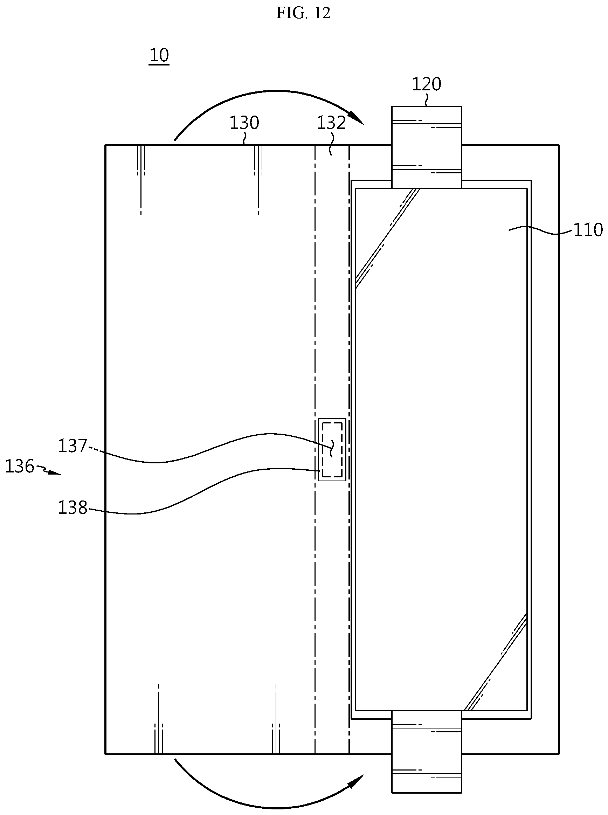

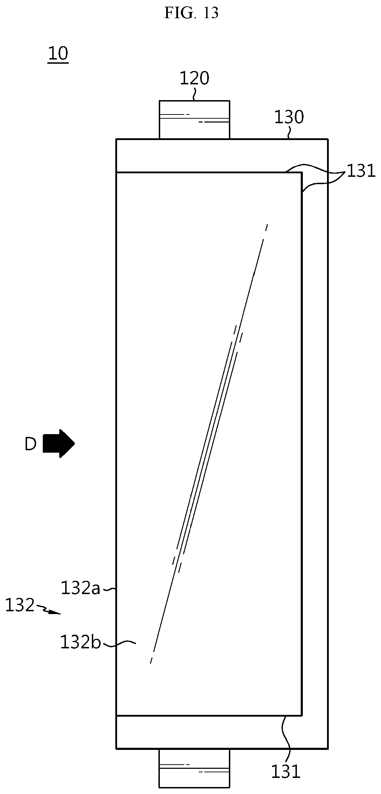

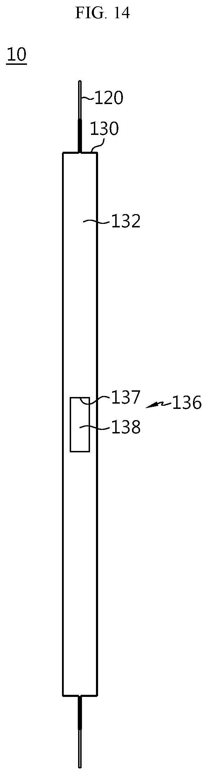

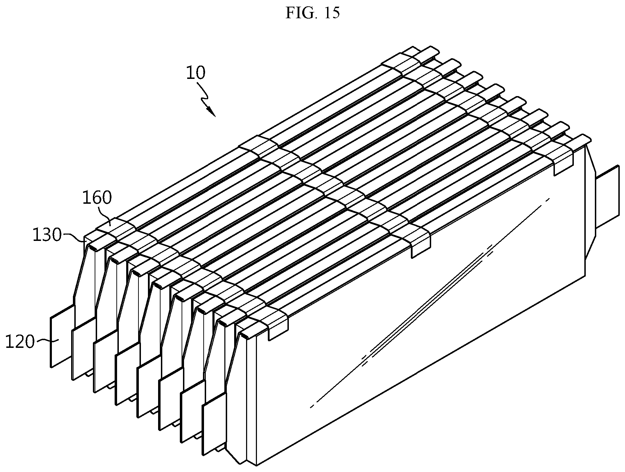

FIG. 11 is a drawing showing a battery cell according to the first embodiment of the present disclosure in which a pouch is unfolded, FIG. 12 is a drawing showing a thin film coupled to a through hole formed in the pouch in FIG. 11, FIG. 13 is a drawing showing that the pouch is folded in an arrow direction in FIG. 12, FIG. 14 is a drawing viewed along an arrow direction D in FIG. 13, and FIG. 15 is a perspective view showing that a plurality of battery cells according to the first embodiment of the present disclosure are stacked, seen from above.

The battery cell 10 according to the first embodiment of the present disclosure may include various types of battery cells 10. For example, the battery cell 10 may include at least one of a pouch-type battery cell, a cylindrical battery cell, and a rectangular battery cell. However, for convenience of explanation, the following description will focus on the case where the battery cell 10 is a pouch-type battery cell.

Referring to FIGS. 11 and 12, the battery cell 10 includes an electrode assembly 110, an electrode lead 120, and a cell case 130.

The electrode assembly 110 may include a first electrode plate with a first polarity, a second electrode plate with a second polarity, and a separator interposed between the first electrode plate and the second electrode plate. For example, the first electrode plate may be a positive electrode plate coated with a positive electrode active material or a negative electrode plate coated with a negative electrode active material, and the second electrode plate may correspond to an electrode plate having a polarity opposite to that of the first electrode plate. That is, if the first electrode plate is a positive electrode plate, the second electrode plate may be a negative electrode plate, and if the first electrode plate is a negative electrode plate, the second electrode plate may be a positive electrode plate. The electrode assembly 110 may be accommodated in the battery case in a state where a plurality of positive electrode plates and negative electrode plates are stacked.

The electrode assembly 110 may have a structure in which a plurality of unit cells arranged in the order of a first electrode plate, a separator and a second electrode plate or a plurality of bi-cells arranged in the order of a first electrode plate, a separator, a second electrode plate, a separator, a first electrode plate, a separator and a second electrode plate are stacked according to the battery capacity.

The electrode plates of the electrode assembly 110 may be formed as a structure in which active material slurry is applied to a current collector made of aluminum (Al) or copper (Cu). The slurry may be formed by stirring, typically, a granular active material, an auxiliary conductor, a binder, a plasticizer, etc. with a solvent added thereto. In addition, each electrode plate may have an uncoated portion on which the slurry is not applied.

The positive electrode plate may be formed by including a positive electrode current collector made of a metal thin film with excellent conductivity, for example, an aluminum (Al) foil, and a positive electrode active material layer coated on at least one surface thereof. In addition, the positive electrode plate may include a positive electrode tab made of a metal material, for example, an aluminum (Al) material, at one end thereof. The positive electrode tab may extend and protrude from one end of the positive electrode plate, or may be welded to one end of the positive electrode plate or be bonded using a conductive adhesive.

The positive electrode active material may be a chalcogenide compound that can intercalate/deintercalate lithium ions, and may be formed using composite metal oxides such as LiCoO₂, LiMn₂O₄, LiNiO₂, LiNi₁₋ₓCoₓO₂ (0<x<1), and LiMnO₂.

The negative electrode plate may be formed to include a negative electrode current collector made of a conductive metal plate, for example, a copper (Cu) foil, and a negative electrode active material layer coated on at least one surface thereof. In addition, the negative electrode plate may include a negative electrode tab formed at one end of a metal material, for example, copper (Cu) or nickel (Ni). The negative electrode tab may extend and protrude from one end of the negative electrode plate, or may be welded to one end of the positive electrode plate or be bonded using a conductive adhesive.

The negative electrode active material may also be formed of a material such as a carbon (C) series material, silicon (Si), tin (Sn), tin oxide, tin alloy composite, transition metal oxide, lithium metal nitride, or lithium metal oxide so that lithium ions can be intercalated/deintercalated.

The separator may be interposed between the positive electrode plate and the negative electrode plate to prevent a short circuit that may occur between the positive electrode plate and the negative electrode plate, and only the movement of lithium ions is possible due to the separator.

The separator may use a porous polymer film, for example, a porous polymer film made of a polyolefin polymer such as an ethylene homopolymer, a propylene homopolymer, an ethylene/butene copolymer, an ethylene/hexene copolymer, an ethylene/methacrylate copolymer, etc., alone or in combination.

The separator may use a common porous nonwoven fabric, such as a nonwoven fabric made of high-melting-point glass fiber, polyethylene terephthalate fiber, etc.

At least one surface of the separator may include a coating layer of inorganic particles. It is also possible that the separator itself is formed as a coating layer of inorganic particles. The particles forming the coating layer may have a structure in which they are coupled with a binder so that an interstitial volume exists between adjacent particles.

The electrode lead 120 is electrically connected to the electrode assembly 110. The electrode lead 120 is a type of terminal that is exposed to the outside and connected to an external device, and a conductive material may be used. The electrode lead 120 may include a positive electrode lead and a negative electrode lead.

The positive electrode lead and the negative electrode lead may be positioned in opposite directions with respect to the longitudinal direction of the battery cell 10, or the positive electrode lead and the negative electrode lead may be positioned in the same direction with respect to the longitudinal direction of the battery cell 10.

For convenience of explanation, the following description focuses on the case where the electrode leads 120 are connected to both longitudinal sides of the electrode assembly 110.

The electrode assembly 110 is accommodated in the cell case 130. That is, the cell case 130 may have an accommodation space for accommodating the electrode assembly 110 therein. At this time, the cell case 130 accommodates an electrolyte therein, and the electrode assembly 110 may be accommodated in the cell case 130 in a state where the electrode assembly 110 is impregnated with the electrolyte.

The cell case 130 may be made of a metal material such as aluminum (Al), but the material of the cell case 130 is not limited thereto. For convenience of explanation, the following description focuses on the case where the cell case 130 is made of aluminum.

The cell case 130 may be configured to support the electrode lead 120. At this time, the electrode lead 120 may protrude outside the cell case 130 by a preset length.

Referring to FIGS. 11 to 13, the cell case 130 is folded (see arrow in FIG. 12) in a state where the electrode assembly 110 is accommodated inside one cell case 130 (see FIG. 11), and then three-sided sealing may be performed (see FIG. 13). If three sides of the cell case 130 are sealed in this way, a sealing portion 131 and a non-sealing portion 132 (see FIG. 14) are formed in the cell case 130. The sealing portion 131 prevents, for example, the electrolyte inside the cell case 130 from leaking out, and also prevents a gas generated during charging and discharging of the battery cell from leaking out of the cell case.

Referring to FIG. 14, the cell venting portion 136 for venting a flame or gas is formed in the non-sealing portion 132 of the cell case 130.

Referring to FIGS. 11 and 12 again, the cell venting portion 136 may include a through hole 137 and a thin film 138.

Referring to FIG. 11, the through hole 137 is formed in the non-sealing portion 132 of the cell case 130. The through hole 137 may have various shapes, for example, a rectangular shape, but is not limited thereto.

Referring to FIG. 13, the sealing portion 131 may be provided in plurality. In FIG. 13, since three-sided sealing is performed, three sealing portions 131 are provided along the end, i.e., the edge, of the cell case 130.

Referring to FIG. 13, the non-sealing portion 132 may be provided in plurality. For example, the non-sealing portion 132a is formed at a portion where the cell case 130 is bent, and also, the non-sealing portion 132b is formed on the widest surface of the pouch. Here, the cell venting portion 136 may be formed in the non-sealing portion 132a with the narrowest area among the plurality of non-sealing portions 132a and 132b (see the non-sealing portion 132 in FIG. 14).

Referring to FIG. 12, the thin film 138 may be coupled to the non-sealing portion 132 to block the through hole 137. The thin film 138 may be made of various materials, for example, a metal material. In this case, the thin film 138 may be coupled to the non-sealing portion 132 by welding or bonding.

The cell venting portion 136 may be configured to be ruptured by flame or gas prior to the sealing portion 131.

In one embodiment, the thin film 138 of the cell venting portion 136 may be formed thinner than the thickness of the non-sealing portion 132 of the cell case 130. If the thin film 138 is formed thinner than the cell case 130 in this way, when gas is generated inside the battery cell 10 and the internal pressure increases, the thin film 138 may be ruptured more easily, and thereby the gas may be easily discharged to the outside of the cell case 130.

In a modified embodiment of the above embodiment, the thin film 138 of the cell venting portion 136 may be made of a material having a lower melting point than the non-sealing portion 132 of the cell case 130. If the thin film 138 is made of a material having a lower melting point than the cell case 130 in this way, when a flame is generated inside the battery cell 10 and the temperature increases, the thin film 138 may melt and rupture easily, and thereby the flame may be easily discharged to the outside of the cell case 130.

Referring to FIG. 15, the battery cells 10 may be stacked without the cell cover 150. In this case, a tape 160 may be attached to the upper side of the battery cell 10. After bending a protruding end of the pouch formed by sealing the cell case 130, the tape 160 may be attached to the bent protruding end.

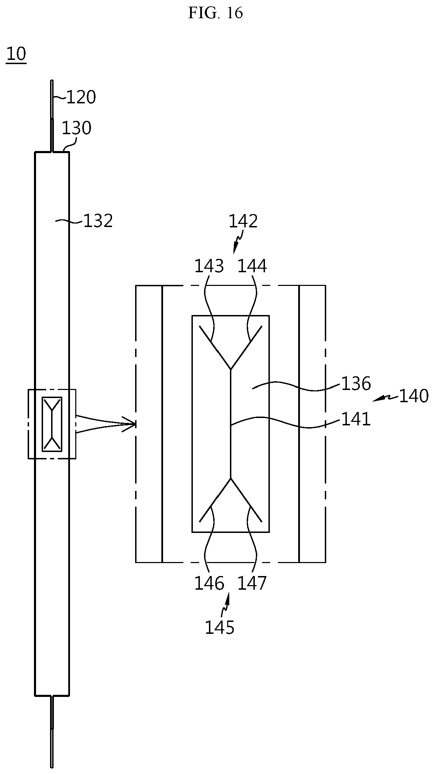

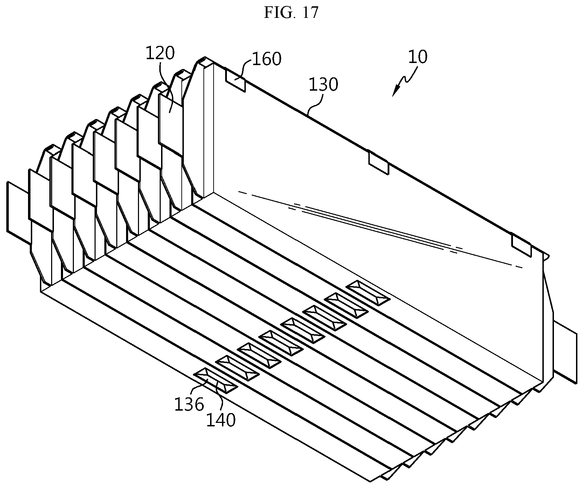

FIG. 16 is a drawing showing a notch formed in a thin film according to a modified embodiment of FIG. 14, and FIG. 17 is a perspective view showing that a plurality of battery cells of FIG. 16 are stacked, seen from below.

Referring to FIGS. 16 and 17, a line-shaped groove or notch 140 may be formed in the cell venting portion 136. If the groove or notch 140 is formed in the cell venting portion 136 in this way, there is an effect that the cell venting portion 136 ruptures more easily by flame or gas.

The groove or notch 140 may be formed in various shapes, and may include, for example, a center line 141, a first end line 142, and a second end line 145. The following description focuses on a case where the line-shaped notch 140 is formed. In addition, the description of the groove is replaced with the description of the notch 140.

The center line 141 is formed in the center portion. The size of the notch 140 may be appropriately adjusted according to the scale, size, capacity, etc. of the battery cell 10. The first end line 142 of the notch 140 may be formed to extend from one end of the center line 141, and the second end line 145 of the notch 140 may be formed to extend from the other end of the center line 141.

The first end line 142 may be configured to include a first direction line 143 extending in the first direction from one end of the center line 141, and a second direction line 144 extending in the second direction from one end of the center line 141, but is not limited thereto. If the first direction line 143 and the second direction line 144 are formed, there is an effect that the rupture may be made easier than the case where only the center line 141 is formed.

As in FIG. 16, the first direction line 143 and the second direction line 144 may be formed symmetrically to each other, but are not limited thereto.

The second end line 145 may be configured to include a third direction line 146 extending in the third direction from the other end of the center line 141, and a fourth direction line 147 extending in the fourth direction from the other end of the center line 141, but is not limited thereto. If the third direction line 146 and the fourth direction line 147 are formed, similar to the first direction line 143 and the second direction line 144, there is an effect that the rupture may be made easier than the case where only the center line 141 is formed.

As in FIG. 16, the third direction line 146 and the fourth direction line 147 may be formed symmetrically to each other, but are not limited thereto. Meanwhile, the first end line 142 and the second end line 145 may also be formed symmetrically to each other, but are not limited thereto.

Referring to FIG. 17, the battery cells 10 of FIG. 16 may be stacked without the cell cover 150.

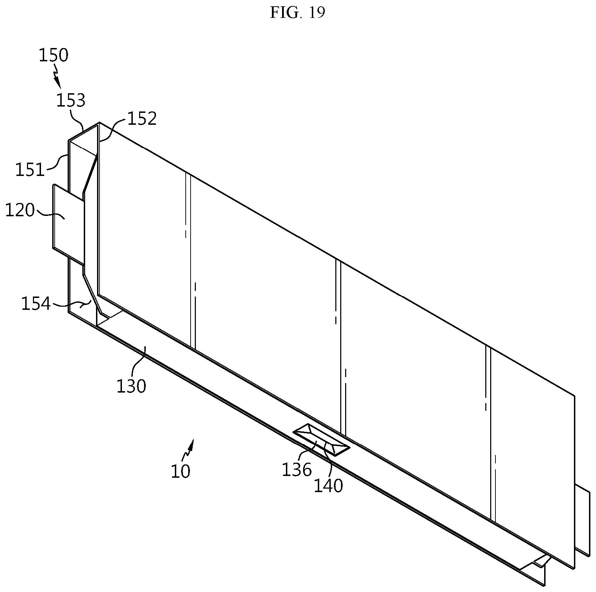

FIG. 18 is an exploded perspective view showing the battery cell and a cell cover according to the first embodiment of the present disclosure, and FIG. 19 is a perspective view showing that the cell cover is coupled to the battery cell in FIG. 18.

Referring to FIGS. 18 and 19, the cell cover 150 may be configured to surround and support the battery cell 10 to reinforce the rigidity of the cell case 130. That is, the cell cover 150 may be configured to partially surround the battery cell 10 so that at least one side of the surrounded battery cell 10 is exposed to the outside.

An open portion 154 may be formed at the lower side of the cell cover 150. For example, referring to FIG. 19, since the open portion 154 is formed at the lower side of the cell cover 150, when the cell cover 150 is coupled to the battery cell 10, the lower side of the battery cell 10 is exposed to the outside, and the cell cover 150 is provided to surround the side surface and the upper side of the battery cell 10.

Referring to FIGS. 18 and 19, the cell cover 150 may be configured to include a first cover portion 151, a second cover portion 152, and a third cover portion 153.

The first cover portion 151 may be configured to cover one side of the battery cell 10. The first cover portion 151 may be configured to extend downward from one end of the third cover portion 153. In addition, the first cover portion 151 may be configured to surround a wide surface of the battery cell accommodated therein.

The second cover portion 152 may be configured to cover the other side of the cell case 130. The second cover portion 152 may be positioned to be horizontally spaced apart from the first cover portion 151. In addition, the second cover portion 152 may be configured to extend downward from the other end of the third cover portion 153. In addition, the second cover portion 152 may be configured to surround a wide surface of the battery cell accommodated therein.

The third cover portion 153 connects the first cover portion 151 and the second cover portion 152 and covers the upper side of the cell case 130. In addition, the open portion 154 may be formed at a side opposite to the third cover portion 153.

The cell venting portion 136 may be disposed to face downward to correspond to the open portion 154, and in this case, the cell venting portion 136 may be exposed downward through the open portion 154 of the cell cover 150. In addition, the cell cover 150 may be configured such that the cell venting portion 136 of the surrounded battery cell 10 is exposed toward the bottom surface of the battery module 20 or the battery pack 30.

The cell cover 150 may be configured to support the upright state of the battery cell 10. That is, the cell cover 150 may be configured to surround one or more battery cells 10 and maintain the upright state, i.e., the standing state, of the surrounded battery cells 10.

The cell cover 150 may be configured to surround various numbers of battery cells 10 together. For example, the cell cover 150 may be configured to surround one battery cell 10, or may be configured to surround two or more battery cells 10 together.

The cell cover 150 may be placed in the module case 210 of the battery module 20, or may be placed directly in the pack case 310 of the battery pack 30. Here, if the cell cover 150 is placed in the module case 210, the cell cover 150 maintains the upright state of the battery cell 10 as described above. This has the effect of facilitating handling and installation of the battery cells mounted in the battery module 20.

When the cell cover 150 is directly placed in the pack case 310, the standing of the battery cell 10 may be maintained, thereby facilitating the handling and installation of the battery cells mounted in the battery pack 30. In addition, since the module case 210 is removed, more battery cells 10 may be accommodated in the pack case 310 as much as the area of the module case 210, thereby increasing the energy density. In addition, since the module case 210 is removed, there is also the effect of reducing the overall weight and volume of the battery pack 30.

Since the battery cells 10 may be in direct contact with the pack case 310, the heat emitted from each battery cell 10 may be directly transferred to the pack case 310, thereby improving the cooling performance. In other words, the cooling performance of the battery pack 30 may be secured more effectively.

Referring to FIG. 19, the cell cover 150 may be formed in an approximately n-shape. At this time, the front, rear, and lower sides of the cell cover 150 may be open. However, the shape of the cell cover 150 is not limited to an approximately n-shape. The cell cover 150 may be formed in various shapes, and, for example, the cell cover 150 may be formed in an '□' shape, a 'U' shape, or an 'O' shape.

The cell cover 150 may be made of a metal material. In particular, the cell cover 150 may be made of a steel material, for example, stainless steel (SUS). In this case, since the stainless steel material has excellent mechanical strength and rigidity and a higher melting point than the aluminum material, even if a flame is generated in any battery cell 10, the cell cover 150 may be more effectively prevented from being melted by the flame, etc. In other words, damage or breakage of the battery cell 10 may be prevented more effectively, and also the battery cell 10 may be handled more easily. However, the material of the cell cover 150 is not limited thereto.

The cell cover 150 may be at least partially bonded to the battery cell 10. Also, a thermal resin (not shown) may be interposed between the battery cell 10 and the pack case 310, or between the cell cover 150 and the pack case 310. Also, a thermal resin (not shown) may be interposed between the battery cell 10 and the module case 210, or between the cell cover 150 and the module case 210.

FIGS. 18 and 19 shows an embodiment in which the groove or notch 140 is formed in the cell venting portion 136. However, as in FIG. 14, the cell cover 150 may also be applied to the battery cell 10 of an embodiment in which the groove or notch 140 is not formed in the cell venting portion 136. In this case, the description regarding the cell cover 150 is common with the description regarding the case where the groove or notch 140 is formed in the cell venting portion 136.

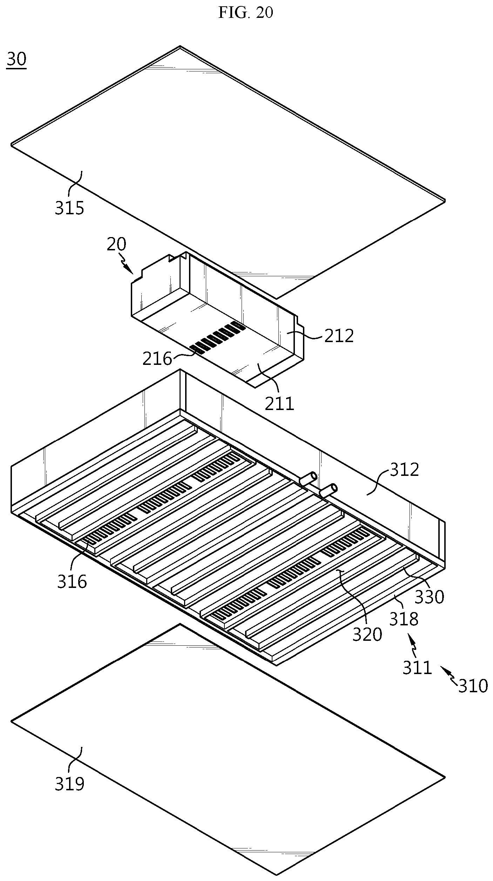

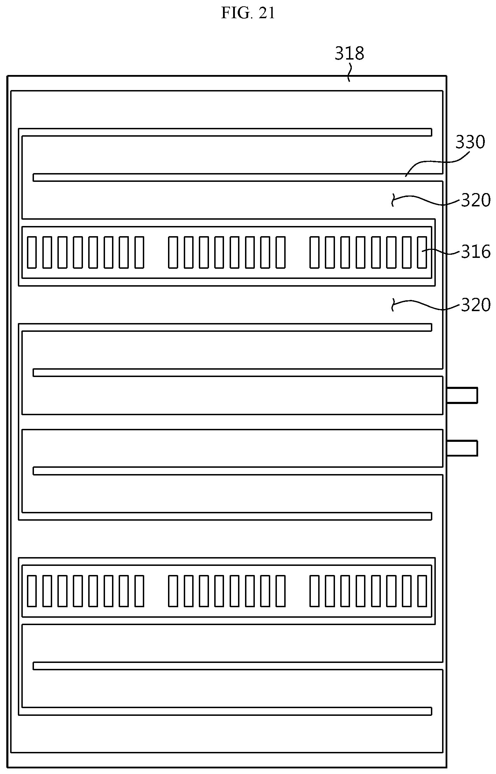

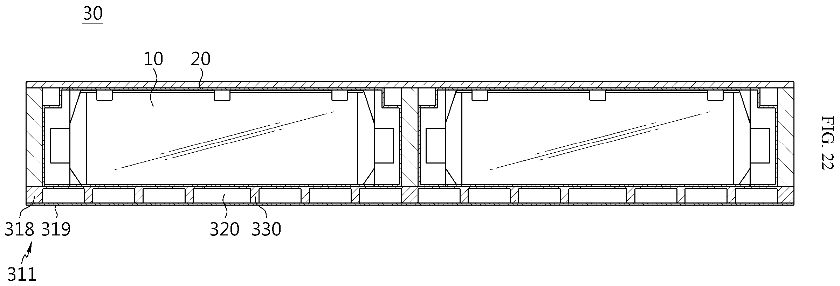

FIG. 20 is a perspective view showing a bottom surface of a battery pack according to a modified embodiment of the present disclosure, with a lower plate separated, FIG. 21 is a drawing, seen along E of FIG. 20, and FIG. 22 is a cross-sectional side view of FIG. 20.

Referring to FIGS. 20 to 22, the pack case 310 includes a lower frame 311, and a cooling channel 320 may be formed in the lower frame 311. The cooling channel 320 formed in the lower frame 311 may cool not only the battery cell 10 but also the flame or gas discharged through the pack venting portion 316.

The lower frame 311 may include a body 318 and a lower plate 319 coupled to the body 318. The cooling channel 320 may be formed at various locations in the lower frame 311, and, for example, may be formed inside the lower frame 311. Referring to FIG. 22, when the body 318 and the lower plate 319 are coupled, the cooling channel 320 may be formed in a space between the body 318 and the lower plate 319.

Referring to FIGS. 20 and 21 together, the cooling channel 320 may be formed in a direction intersecting the direction in which the plurality of battery cells 10 are arranged (the battery cells 10 arranged inside the battery module 20 in FIG. 20). For example, the cooling channel 320 may be formed in a direction orthogonal to the direction in which the plurality of battery cells 10 are arranged (the battery cells 10 arranged inside the battery module 20 in FIG. 20).

The battery cells 10 may be cooled by forming the cooling channel 320 at the bottom of the battery cells 10 in a direction intersecting the direction in which the battery cells 10 are arranged. A cooling medium such as air, water or cooling oil may flow through the cooling channel 320. The cooling medium may be more diverse and is not limited thereto.

The cooling channel 320 may be formed adjacent to at least one of both sides of the pack venting portion 316. As in FIG. 21, the cooling channel 320 may be formed at both sides of the pack venting portion 316. Alternatively, in another embodiment, the cooling channel 320 may be formed at only one side of the pack venting portion 316. If the cooling channel 320 is formed adjacent to at least one of both sides of the pack venting portion 316 in this way, the flame or gas flowing out through the pack venting portion 316 may be cooled by the cooling medium flowing in the cooling channel 320. In addition, by doing so, flame propagation and thermal runaway may be prevented.

The cooling channel 320 may be formed in various ways, for example, by a barrier member 330. One or more barrier members 330 may be provided to form the cooling channel 320. The cooling channel 320 may be formed in the space between the barrier member 330 and the lower plate 319.

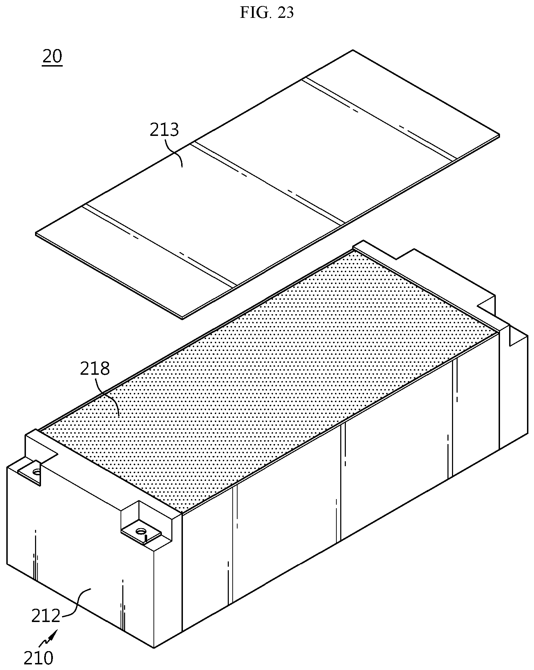

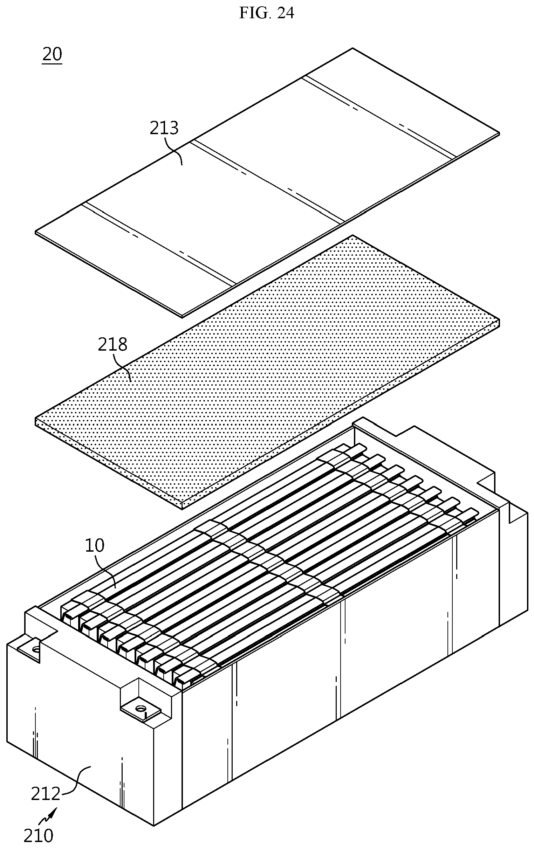

FIG. 23 shows a battery module according to a modified embodiment of the present disclosure, with an upper case separated, and FIG. 24 shows a battery module according to another modified embodiment of the present disclosure, with an upward venting prevention member separated.

Referring to FIGS. 23 and 24, the module case 210 may include an upper case 213. An upward venting prevention member 218 may be disposed at the lower side of the upper case 213 to prevent flame or gas from venting upward.

The battery pack 30 according to the first embodiment of the present disclosure may be configured to discharge flame or gas through the pack venting portion 316 formed at the lower portion of the pack case 310 and the module venting portion 326 formed at the lower portion of the module case 210. To this end, it is advantageous to prevent the flame or gas from moving in another direction, for example, toward the upper side of the module case 210 or the pack case 310. In this way, the upward venting prevention member 218 may be arranged at the lower portion of the upper case 213 of the module case 210 to prevent the flame or gas from venting upward, and thus the flame or gas may move downward when a thermal event occurs.

The upward venting prevention member 218 may be diverse, and may be, for example, a compression pad of any type disposed between the upper case 213 and the battery cell 10. The compression pad may be configured to pressurize the battery cell 10.

The upward venting prevention member 218 may be manufactured from a variety of materials, for example silicone, but is not limited thereto.

The upward venting prevention member 218 may be a thermal resin applied to the battery cell 10. The thermal resin has the advantage of being able to adhere more closely to the battery cell 10.

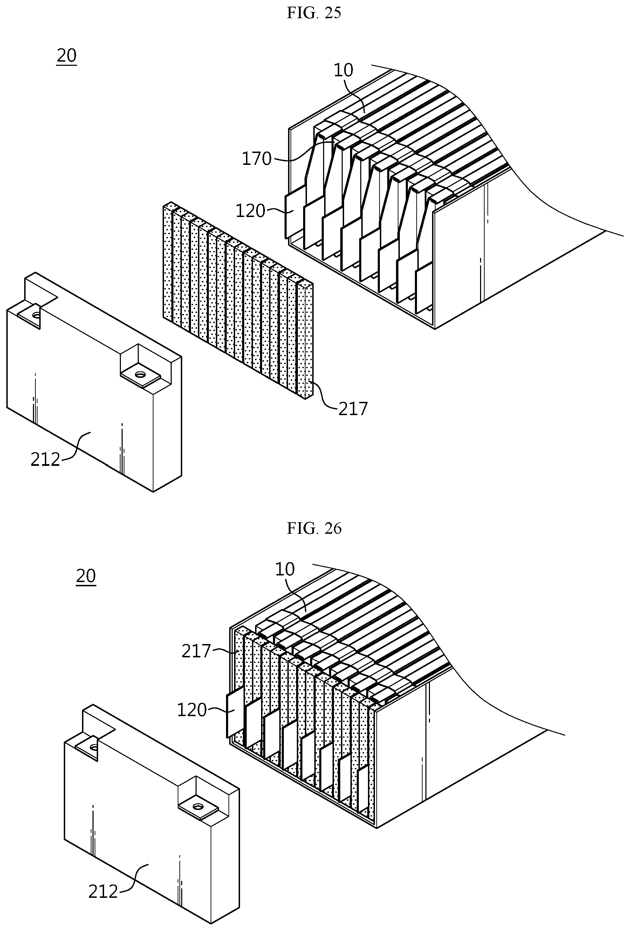

FIG. 25 shows a battery module according to still another modified embodiment of the present disclosure, with the side case of the battery module separated, and FIG. 26 shows a side venting prevention member positioned on a terrace portion of a battery cell 10 in FIG. 25.

Referring to FIGS. 25 and 26, the module case 210 may include a side case 212. A side venting prevention member 217 may be positioned at the inner side of the side case 212 to prevent flame or gas from venting to the side surface.

For the same reason as the upward venting prevention member 218 described above, it is advantageous to prevent the flame or gas from moving to the side surface of the module case 210 or the pack case 310 in order to discharge the flame or gas through the pack venting portion 316 formed at the lower portion of the pack case 310 and the module venting portion 326 formed at the lower portion of the module case 210. In this way, the side venting prevention member 217 may be disposed at the inner side of the side case 212 of the module case 210 in order to prevent the flame or gas from being vented to the side surface, and thus the flame or gas may move downward when a thermal event occurs.

The side venting prevention member 217 may be disposed at various locations, and, for example, as shown in FIGS. 25 and 26, the side venting prevention member 217 may be positioned at a terrace portion 170 of a plurality of battery cells 10.

The side venting prevention member 217 may be made of various materials having insulating and fire-resistant properties, for example silicone, but the material of the side venting prevention member 217 is not limited thereto.

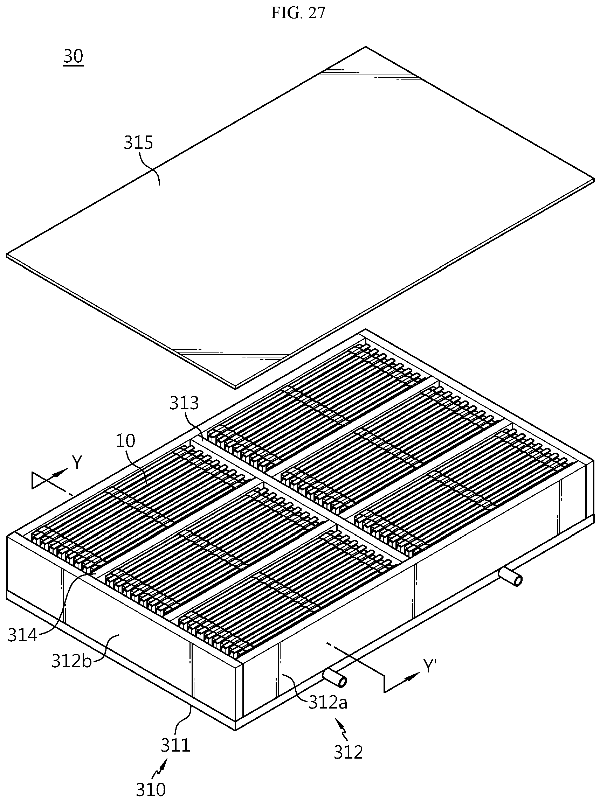

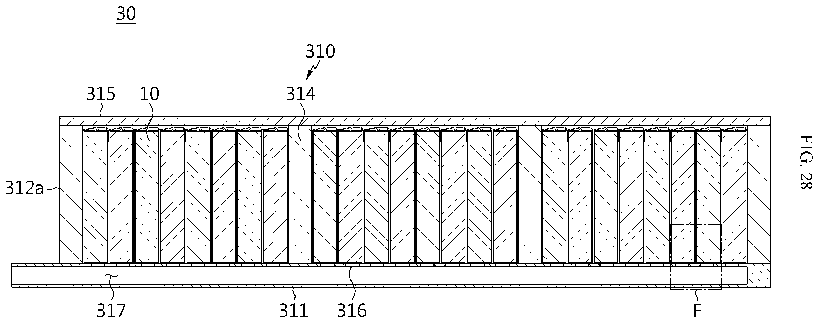

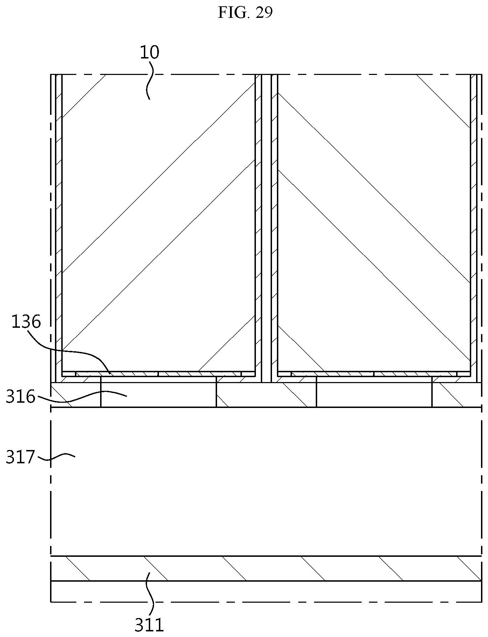

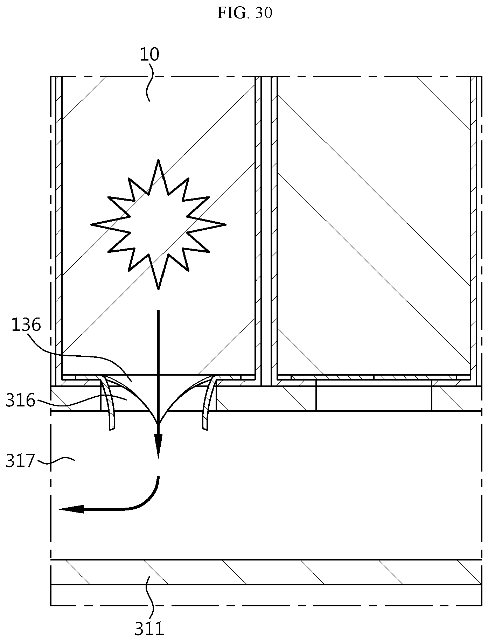

FIG. 27 is a schematic exploded perspective view showing a battery pack according to the second embodiment of the present disclosure, FIG. 28 is a cross-sectional view taken along line Y-Y' of FIG. 27, FIG. 29 is an enlarged view showing part F of FIG. 28, and FIG. 30 is a drawing showing that a cell venting portion is ruptured in FIG. 29 so that a flame or gas is discharged.

Referring to FIG. 27, the battery pack 30 according to the second embodiment may be configured to include a plurality of battery cells 10 and a pack case 310.

In the first embodiment, the battery pack 30 includes the battery module 20, but in the second embodiment, the battery module 20 is removed and the battery cell 10 is directly accommodated in the battery pack 30, different from the first embodiment. However, the common content described in the first embodiment may also be applied to the second embodiment. In addition, the description in the second embodiment that can be applied to the first embodiment may also be applied to the first embodiment.

Referring to FIGS. 27 and 28, the battery cell 10 may be directly accommodated in the pack case 310 of the battery pack 30. According to this method, in the battery pack 30, more battery cells 10 may be accommodated in the space that has been occupied by the module case 210 of the battery module 20, thereby increasing space efficiency and improving battery capacity. There is also an effect of reducing weight and volume by removing the module case 210.

A cell cover 150 (see FIG. 18) supporting the battery cells 10 may be provided so that the battery cells 10 may be directly accommodated in the pack case 310. However, the cell cover 150 is optional, and the battery cells 10 may be directly accommodated in the pack case 310 without the cell cover 150. A specific description of the cell cover 150 is replaced with the above description.

Referring to FIG. 29, a cell venting portion 136 is formed in the battery cell 10 itself, and the cell venting portion 136 of the battery cell 10 and the pack venting portion 316 of the pack case 310 may be communicated. A detailed description of the cell venting portion 136 of the battery cell 10 is replaced with the above description.

As in FIG. 30, if the cell venting portion 136 of the battery cell 10 is ruptured by flame or gas, the cell venting portion 136 may be configured to communicate with the pack venting portion 316. The pack venting portion 316 may be formed as an opening. That is, referring to FIG. 30, when the cell venting portion 136 of the battery cell 10 is ruptured, the cell venting portion 136 and the pack venting portion 316 of the pack case 310 may be communicated, and thereby, the flame or gas generated from the battery cell 10 may be discharged to the outside of the pack case 310 through the cell venting portion 136 and the pack venting portion 316. That is, in this way, directional venting in which the flame or gas generated by ignition in the battery cell 10 is discharged in a preset direction becomes possible. In addition, there is an effect of preventing serial thermal runaway through directional venting of flame or gas and improving the stability of the battery cells 10.

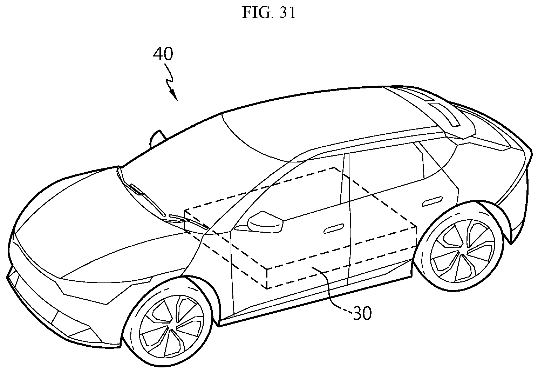

FIG. 31 is a drawing for illustrating a vehicle including the battery pack according to each embodiment of the present disclosure.

Referring to FIG. 31, a vehicle 40 according to an embodiment of the present disclosure may include one or more battery packs 30 according to each embodiment described above. Also, the vehicle 40 may include one or more battery cells 10 or battery modules 20 according to an embodiment of the present disclosure.

The vehicle 40 includes, for example, various types of vehicles that are designed to use electricity, such as electric vehicles or hybrid electric vehicles.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and, particularly, is available to industries related to secondary batteries.

## Claims

1. A battery pack comprising:
a plurality of battery cells; and
a pack case configured to accommodate the plurality of battery cells and having a pack venting portion for venting flame or gas,
wherein a cell venting portion is formed in the battery cell itself, and when the cell venting portion of the battery cell and the pack venting portion of the pack case are communicated.

2. The battery pack according to claim 1,
wherein the pack venting portion is formed at a lower portion of the pack case.

3. The battery pack according to claim 2,
wherein a directional venting channel is formed in the pack case to provide a path that is communicated with the pack venting portion to discharge the flame or the gas to the outside of the pack case.

4. The battery pack according to claim 3,
wherein the directional venting channel is formed below the pack venting portion.

5. The battery pack according to claim 1,
wherein the pack case includes a lower frame, and
wherein a cooling channel is formed in the lower frame to cool not only the battery cell but also the flame or the gas discharged through the pack venting portion.

6. The battery pack according to claim 5,
wherein the cooling channel is formed in the lower frame.

7. The battery pack according to claim 5,
wherein the cooling channel is formed in a direction intersecting a direction in which the plurality of battery cells are arranged.

8. The battery pack according to claim 5,
wherein the cooling channel is formed on at least one of both sides of the pack venting portion.

9. The battery pack according to claim 5,
wherein the lower frame includes a body and a lower plate coupled to the body,
wherein at least one barrier member is provided to form the cooling channel, and
wherein the cooling channel is formed between the barrier member and the lower plate.

10. The battery pack according to claim 1,
wherein the battery pack comprises a plurality of battery modules in which the plurality of battery cells are accommodated,
wherein a module venting portion is formed in the battery module, and
wherein the cell venting portion of the battery cell, the module venting portion of the battery module, and the pack venting portion of the pack case are all communicated.

11. The battery pack according to claim 10,
wherein the battery module includes a module case in which the plurality of battery cells are accommodated and the module venting portion is formed to vent flame or gas, and
wherein when the cell venting portion of the battery cell is ruptured, the cell venting portion, the module venting portion of the module case, and the pack venting portion of the pack case are communicated with each other.

12. The battery pack according to claim 11,
wherein the module venting portion is formed at a lower portion of the module case.

13. The battery pack according to claim 12,
wherein the module case has a thermal resin coated region and a thermal resin uncoated region formed in the lower portion thereof, and
wherein the module venting portion is formed in the thermal resin uncoated region.

14. The battery pack according to claim 11,
wherein the module case includes a lower case and side cases, and
wherein at least one of the side cases is formed by being bent from the lower case.

15. The battery pack according to claim 14,
wherein the module case includes a U-shaped case.

16. The battery pack according to claim 11,
wherein the module case includes an upper case, and
wherein an upward venting prevention member is disposed at a lower side of the upper case to prevent flame or gas from venting upward.

17. The battery pack according to claim 16,
wherein the upward venting prevention member is a compression pad disposed between the upper case and the battery cell.

18. The battery pack according to claim 17,
wherein the upward venting prevention member is made of silicone.

19. The battery pack according to claim 16,
wherein the upward venting prevention member is a thermal resin applied to the battery cell.

20. The battery pack according to claim 11,
wherein the module case includes a side case, and
wherein a side venting prevention member is disposed at an inner side of the side case to prevent flame or gas from venting to a side surface.

21. The battery pack according to claim 20,
wherein the side venting prevention member is disposed in a terrace portion of the plurality of battery cells.

22. The battery pack according to claim 21,
wherein the side venting prevention member is made of silicone.

23. The battery pack according to claim 1,
wherein the battery cell is a pouch-type battery cell,
wherein the pouch-type battery cell includes:
an electrode assembly including a first electrode plate with a first polarity, a second electrode plate with a second polarity, and a separator interposed between the first electrode plate and the second electrode plate;
an electrode lead connected to the electrode assembly; and
a cell case configured to accommodate the electrode assembly and support the electrode lead and having a sealing portion and a non-sealing portion,
wherein the cell venting portion is formed in the non-sealing portion of the cell case.

24. The battery pack according to claim 23,
wherein the cell venting portion includes:
a through hole formed in the non-sealing portion of the cell case; and
a thin film coupled to the non-sealing portion to block the through hole.

25. The battery pack according to claim 24,
wherein the thin film of the cell venting portion is formed thinner than a thickness of the non-sealing portion of the cell case.

26. The battery pack according to claim 24,
wherein the thin film of the cell venting portion is made of a material having a lower melting point than the non-sealing portion of the cell case.

27. The battery pack according to claim 24,
wherein the thin film is made of a metal material.

28. The battery pack according to claim 27,
wherein the thin film is coupled to the non-sealing portion by welding or bonding.

29. The battery pack according to claim 1,
wherein the cell venting portion has a line-shaped groove or notch formed therein.

30. The battery pack according to claim 29,
wherein the groove or notch includes:
a center line formed in a center portion;
a first end line extending from one end of the center line; and
a second end line extending from the other end of the center line.

31. The battery pack according to claim 23, wherein the cell venting portion is ruptured prior to the sealing portion by the flame or the gas.

32. The battery pack according to claim 23,
wherein the non-sealing portion is provided in plurality, and
wherein the cell venting portion is formed in a non-sealing portion with a narrowest area among the plurality of the non-sealing portions.

33. The battery pack according to claim 23, further comprising:
a cell cover configured to surround and support the cell case to reinforce rigidity of the cell case.

34. The battery pack according to claim 33,
wherein an open portion is formed at a lower side of the cell cover, and the cell venting portion is disposed to face downward to correspond to the open portion.

35. The battery pack according to claim 34,
wherein the cell cover includes:
a first cover portion covering one side of the cell case;
a second cover portion covering the other side of the cell case; and
a third cover portion connecting the first cover portion and the second cover portion and covering an upper side of the cell case,
wherein the open portion is formed at a side opposite to the third cover portion.

36. The battery pack according to claim 33,
wherein the cell cover is configured to support a standing state of the cell case.

37. A vehicle comprising at least one battery pack according to any one of claims 1 to 36.
